# EUROPEAN PATENT SPECIFICATION

(11) **EP 3 684 490 B1**
(45) Date of publication and mention of the grant of the patent: **07.06.2023**
(21) Application number: 18859931.0
(22) Date of filing: 19.09.2018
(51) Int. Cl.: B01D 19/02, E02B 15/10

(54) **METHOD OF FOAM ABATEMENT**
VERFAHREN ZUR SCHAUMUNTERDRÜCKUNG
PROCÉDÉ DE RÉDUCTION DE MOUSSE SANS PRODUITS CHIMIQUES

(30) Priority: 20.09.2017 US 201762560853 P
(43) Date of publication of application: 29.07.2020
(73) Proprietor: Chemfree Defoam LLC, Jefferson, GA 30549 (US)
(72) Inventor: EMKEY, William, Lewis, Stow, MA 01775 (US)
(74) Representative: Slingsby Partners LLP
(86) International application number: PCT/US2018/051685
(87) International publication number: WO 2019/060376

(56) References cited:
- WO-A1-2004/024317
- CN-U- 204 017 453
- DE-C1- 4 440 629
- JP-A- 2008 302 264
- US-A- 4 659 458
- US-A- 4 990 353
- US-A- 5 089 118
- US-A1- 2008 230 485
- US-A1- 2016 001 200
- US-B2- 9 713 779

## Description

### BACKGROUND

Various industries, including the paper and pulp industries and food processing industries by way of non-limiting example, involve the generation of undesirable foam within and on the processing line. Left uncontrolled, this foam can accumulate uncontrollably and eventually shut down a processing line. A typical industry solution involves the addition of chemical de-foaming or anti-foaming agents to a liquid (e.g., water) associated with the industrial process in question. Although chemical additives have proven effective in controlling unwanted foam accumulation, effective non-chemical methods and solutions have been sought. Two reasons for avoiding chemical additives are cost and safety. Safety is a particular concern in industrial food processing settings because measures must be taken to ensure that levels of chemicals coming in contact with the food and remaining thereon after processing are acceptably low.

Typically, the composition of built-up foam transitions from a 'wet foam' at the bottom of the foam (small bubble structure with water-like flowability) to a 'dry foam' at the surface (large bubbles that adhere to all surfaces and resist flow). Once a significant foam build-up has accumulated, most of the foam volume consists of the drier foam. Several non-chemical approaches for foam control have been evaluated over the years. Some are currently utilized to a limited degree, but primarily to selectively augment chemical additives. There are primarily three basic non-chemical approaches for foam control: (1) water spray, (2) optical, and (3) centrifugal, each of which is briefly described in turn.

Downwardly-directed vertical water sprays are sometimes used to partially "knock down" the foam by spraying the top-surface dry foam to condense it from dry foam to wet foam and thereby reduce the total volume. Large foam-control spray systems are sometimes used in waste treatment and aquaculture farms. The use of water-spray foam control is confined primarily to localized trouble areas, where, due to a combination of physical layout and/or turbulent water flow, foam generation is rapid. These local sprays can be limitedly effective; however, in many cases, these sprays, while reducing the foam volume at the point of impact, can create holes in the foam while pushing foam into the periphery of the spray impact area where it continues to grow. Even the condensed 'wet foam' can continue to grow unacceptably within the spray impact area, thus minimizing any further reduction in foam volume. The use of a sprays in these localized 'hot spots' does not address the foam problem on the entire production line where, due to the continuous agitation throughout a facility, the foam builds within vessels, channels, and tanks, for example.

Optical solutions for controlling foam have been proposed and selectively tested. In one such system, a high power laser is used to destroy foam. These lasers emit light at or near a wavelength at which the liquid has a strong absorption line. It is believed that the optical absorption by the liquid locally heats the surface of a bubble and causes its destruction. One implementation of this approach includes a CO₂ laser mounted directly over a tank into which foam flows, and where additional foam is also generated due to turbulence within the tank. The laser beam 'writes' a line across the foam in a continuously varying pattern. The line defines a region in which the foam is destroyed and the underlying surface water is exposed. Rapid writing of the laser beam reduces the foam volume in those regions and further inhibits foam growth because it provides a localized "non-foamed" region which the surrounding foam fills, thus reducing the rate of foam growth in surrounding regions of the tank. Cost is a primary factor restricting the commercial deployment of such systems. The combination of the systems' capital costs and their operating costs, especially for deployment on a distributed processing line, is widely considered prohibitive.

Centrifugal systems have been used successfully for many years in a variety of industries and applications for separating the constituent liquids and gases of mixtures consisting of liquids and gases. Centrifugal gas/liquid separators typically rotate the liquid itself creating a cyclone or vortex within the liquid. As the "mixed medium" is rotated, the higher-density liquid is driven to the outside leaving behind on the inside the less dense gas, which can be subsequently removed.

Since foam is a gas/liquid mixture of, for example, air and water, a centrifugal gas/liquid separator can be a reasonable approach for non-chemical de-foaming. Consequently, variations of this technology have been studied and have resulted in designs, patents, and products directed at de-foaming applications. For the most part, air/gas separators are complicated systems, all of which require some subset of not only the means for high speed water rotation, but also vacuum systems, pumps, multi-stage impellers, filtering systems, and even heat. These systems do not lend themselves to in-situ foam control, but are best operated as an off-line system where the foamy solution needs to be pulled from all the key areas of the product-flow line into the separator(s), filtered, de-foamed, and then carefully pumped back into the line so as not to generate additional foam. Thus, the current separators manifest themselves as additional stand-alone closed operating systems. The costs associated with these systems are high and include capital cost, installation, maintenance, and floor space.

Other de-foaming technologies exist, but for very specialized applications, such as the aeration/separation systems used in aqua/fish farming. Similar to the application mismatches described above, these are large systems utilizing aeration, pumping, and evacuation techniques. Ultrasonic solutions have also been proposed, and have found specialized applications, such as in canning operations, but have similarly proved not to be a good general fit for broad applications.

To address the aforementioned problems, the sole inventor named in the present application devised a chemical-free foam control system that is now the subject of United States Patent No. 9,713,779, granted July 25, 2017 (hereinafter, the "779 patent"). As successful as that solution has proven in practical implementations, it is also characterized by certain limitations under certain conditions. The limitations of certain "real-world" implementations of the system of the `779 patent lead to innovation of the present system and method.

Like the invention of the '779 patent, the present system builds upon the need for a cost effective, chemical-free foam control system and method that lends itself to broad implementation across various industries challenged by undesirable foam generation. Moreover, like the system of the `779 patent, fluid-spray sources (e.g., "nozzles" or "diffusers") are implemented in accordance with the present invention. However, the chief principles upon with the two systems operate are mutually distinct. In order to facilitate an appreciation for how the solutions of the `779 patent and the present invention differ, a summary of key operative parameters and conditions of the `779 system are provided as part of the background of the present application.

### Operational Summary of the System Covered by the '779 Patent

As explained in the summary of the '779 patent, in each of various implementations of that invention, there is established a foam-displacement path along which foam resulting from a relevant industrial process is to be moved. Also established is a direction along the foam-displacement path in which resultant foam is to be displaced as the foam accumulates on the surface of the liquid associated with the industrial process. In various industrial processes, the "liquid associated with the industrial process" as defined above, and in the claims appended hereto, will comprise water. In still more particular implementations, the liquid associated with the industrial process lacks chemical defoaming additives such as those presently employed and described in the background section of the specification.

A set of fluid-spray sources is provided including at least first and second fluid-spray sources from each of which a foam-subsiding fluid can be selectively ejected under pressure. In a typical implementation, the set of fluid-spray sources will include many more than two fluid-spray sources, but the inventive concept covered by the `779 patent is sufficiently broad to include implementations employing only first and second fluid-spray sources. Moreover, in practice, each fluid-spray source will comprise at least one spray nozzle.

A key aspect of the inventive system described and claimed in the `779 patent is that the fluid-spray sources (e.g., spray nozzles) are serially arranged above the surface of the liquid associated with the industrial process. In the potato washing context, for example, this will mean the fluid-spray sources are arranged above the wash table, which includes a reservoir of water that serves as the "liquid associated with the industrial process." Each fluid-spray source is configured such that foam-subsiding fluid ejected therefrom is sprayed in a spray pattern that is centered about a spray axis. Additionally, each spray pattern, regardless of its general configuration (e.g., planar or conical) is representable by a spray vector extending along the spray axis. Each fluid-spray source is oriented such that its associated spray vector has (i) a non-zero component of spatial extension directed perpendicularly to, and downwardly toward, the liquid associated with the industrial process and (ii) a non-zero component of spatial extension directed parallel to the surface of the liquid associated with the industrial process and in the foam-displacement direction. The serial arrangement of the fluid-spray sources defines the foam displacement path.

When a system of the `779 patent is in use, foam-subsiding fluid is ejected from the fluid-spray sources such that foam impacted by foam-subsiding fluid ejected from the first fluid-spray source is wetted, partially subsided, and displaced in the foam-displacement direction toward the spray being ejected from the second fluid-spray source by which the foam is further wetted, subsided and displaced in the foam-displacement direction. Where the system implements three or more fluid-spray sources, foam initially displaced by the first fluid-spray source is displaced toward, under, then through the spray pattern associated with each successive fluid-spray source along the foam-displacement path, each time being further wetted, subsided and displaced. The result is that the foam volume is reduced in increments as the foam is displaced long the foam-displacement path.

In the inventive method of the `779 patent, foam reduction is tied to movement of accumulated foam along a defined foam-displacement path over the surface of an underlying industrial-process liquid on which the foam is floating. The foam-displacement path typically has discernable starting and ending points, even in implementations in which the foam-displacement path is cyclic. While foam reduction is successive as the foam is moved sequentially between and through fluid-spray sources serially arranged along - and defining - the foam-displacement path, there are cases in which not all of the foam that has been generated is completely subsided before the final set of fluid-spray sources along the foam-displacement path is reached. This may especially be the case in systems characterized by non-cyclic foam-displacement paths, as defined in the `779 patent. The result, especially in systems lacking one or more drains through which residual foam can exit, is that foam reaching the end of a non-cyclic path can eventually accumulate undesirably in "dead zones."

Accordingly, a need exists for further subsiding residual foam left unabated by systems configured in accordance with the invention of the `779 patent. In various implementations, it is envisioned that a system configured for further subsiding residual foam be implemented in conjunction with a system configured to move foam in sequential increments along a foam-displacement path in the general manner described and claimed in the `779 patent.

### SUMMARY

Like the foam control system and method of U.S. Patent 9,713,779, various alternative implementations of a foam control system (alternatively, "foam abatement system") and method within the scope of the present invention have in common the objective of subsiding foam resulting from an industrial process. However, whereas the system of the '779 patent relies upon, and actively induces in its various implementations, movement of the undesired process-resultant foam along the surface of the underlying industrial-process liquid (e.g., water) on which the foam is floating, the present system and method is configured to "trap" the foam to be subsided within a foam-depletion zone and minimize the movement of the foam undergoing depletion with respect to the underlying industrial-process fluid.

By way of non-limiting example, implementations are suited for use in industrial processes involving the washing of starchy or pulpy materials (e.g., paper, agricultural produce, etc.) which, when washed and/or churned in a reservoir of liquid associated with the industrial process, yield foam that accumulates on the liquid. One example of a process for which implementations of the method and system is particularly well-suited involves the preparation of potatoes for the making of potato chips and, more particularly, the washing of potato slices in a wash table before the potato slices are conveyed out of the wash table for subsequent processing (e.g., cooking). While some implementations of the system and method are explained and described in the context of potato processing in both the summary and detailed description, it is to be understood that the invention as defined in the appended claims is not so limited, except to the extent that particular claims are expressly so limited by their own terminology. On the contrary, explicitly within the scope and contemplation of the overall inventive concept is its configuration for, and application within, nearly any process resulting in the production and accumulation of undesirable foam on the surface of an associated, underlying industrial-process liquid, which liquid will frequently include water.

By way of establishing an illustrative environment, each of various implementations is envisioned as a method of subsiding foam resulting from an industrial process and accumulating on the surface of an industrial-process liquid associated with that industrial process along a horizontal liquid-surface plane corresponding to the surface of the industrial-process liquid. Throughout the specification and claims, the term "horizontal," as in "horizontal plane," is used in the sense ordinarily understood, and with reference to the earth's gravitational field. That is, if the weight force of an object on earth is represented by a vector "downwardly directed" toward earth's center, then a horizontal plane is one that is orthogonal to this wright-force vector. Additionally, terms such as "vertical," "above," "below," and "downwardly," and derivatives and synonyms thereof, are used in a similar sense.

Importantly, implementations of the method include designating a foam-depletion zone within which residual foam resulting from the industrial process is situated. The foam-depletion zone has defined in association therewith a depletion-zone perimeter and, inwardly of the depletion-zone perimeter, a depletion-zone center region that, in various implementations, includes a geometric center of the foam-depletion zone.

A set of fluid ejectors is provided that, at least in their individual configurations, but not in their mutual arrangement and alignment, may generally correspond to the fluid-spray sources of the `779 patent. In any event, like the fluid-spray sources of the '779 patent, each fluid ejector is configured to selectively eject a foam-subsiding fluid under pressure in a spray pattern that is representable by a spray vector. Moreover, the spray pattern is typically centered about a spray axis along which the spray vector extends.

While some system configurations within the scope and contemplation of the invention employ as few as two fluid-ejectors working "in opposition" to one another, initial discussion of an implementation employing a plurality of at least three fluid ejectors facilitates conceptualization, and is also more representative of a "real world application." The fluid ejectors are peripherally disposed above the liquid-surface plane and about the depletion-zone perimeter. In this way, the fluid ejectors are above residual foam that is situated within the bounds of the depletion-zone perimeter and on the surface of the liquid associated with the industrial process (a.k.a., the industrial-process liquid).

In addition to their peripheral disposition, the fluid ejectors are mutually arranged so that they are inwardly and downwardly directed toward the depletion-zone center region. Illustratively, each of the fluid ejectors is oriented such that the spray vector associated therewith has (i) a non-zero vertical component of spatial extension directed perpendicularly to, and downwardly toward, the liquid-surface plane and (ii) a non-zero horizontal component of spatial extension directed (a) parallel to the liquid-surface plane and (b) inwardly of the depletion-zone perimeter, and toward the depletion-zone center region, so as to constrain within the foam-depletion zone, by action of the spray patterns collectively emanating from the fluid ejectors, foam situated within the foam-depletion zone for sustained impingement by the spray patterns. In other words, in more layman-like parlance, the general idea is to circumscribe foam within the foam-depletion zone with fluid ejectors such that the spray patterns emanating therefrom mutually cooperate to bombard the foam from opposing sides thereof and "trap" it within the foam-depletion zone by the action of equal and opposite spray forces so that it is subjected to continuous subsidence by the spray patterns.

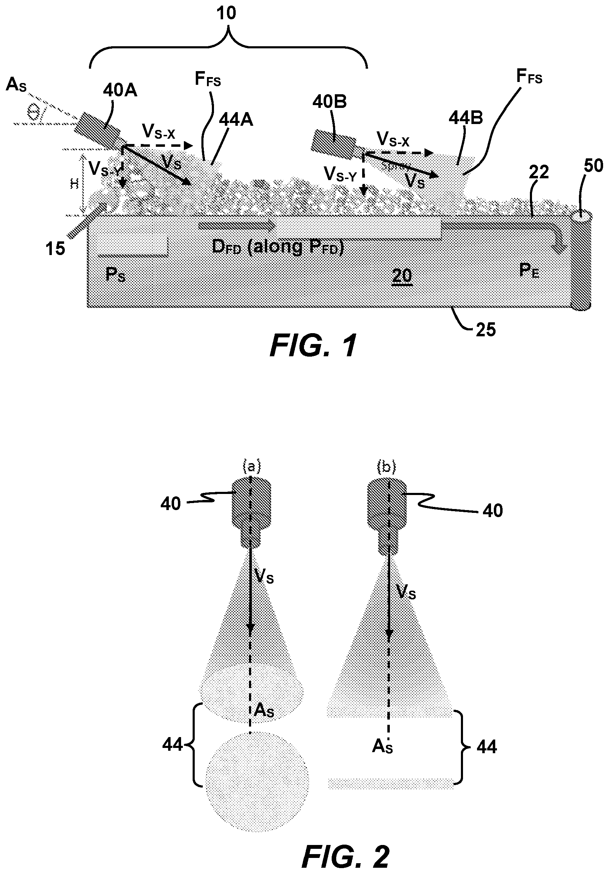

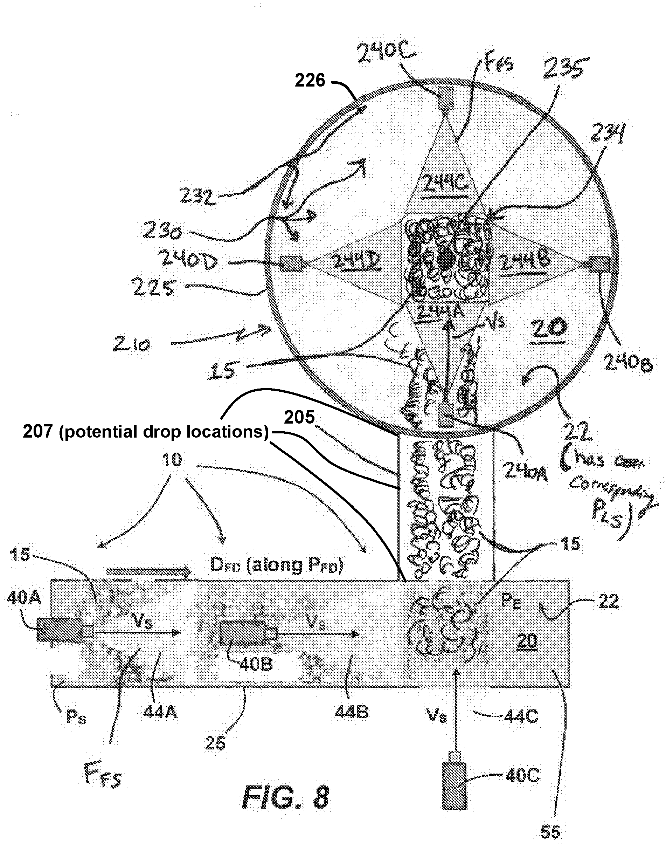

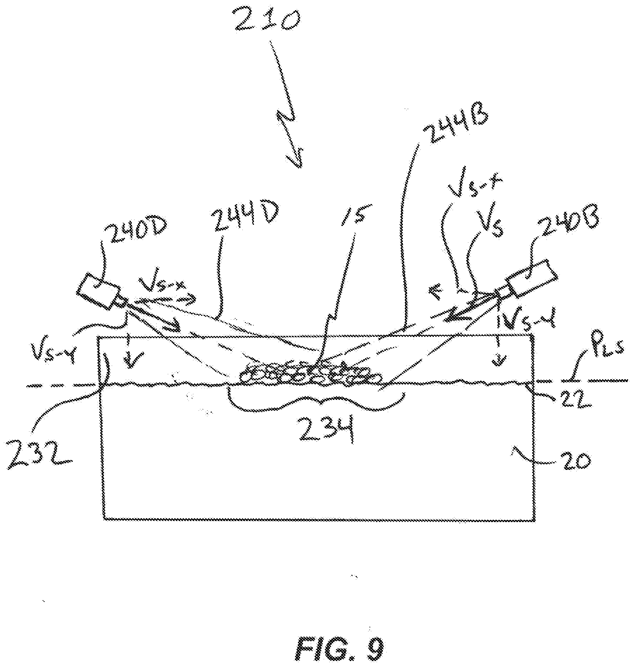

As previously indicated, various implementations of the method aspect involving the containment and depletion of foam within a foam-depletion zone may be employed in conjunction with the methods of U.S. Patent No. 9,713,779 in which the foam is intentionally moved with a non-zero net velocity relative to the underlying industrial-process liquid. Accordingly, the entirety of the detailed description of the '779 patent is actually included in the detailed description below, as are all of the drawings (FIGS. 1-7) of the '779 patent. So as not to disrupt the flow of the previous description and its references to FIGS. 1-7, the content of the previous detailed description is presented first in the following detailed description, and the original numbering of FIG. 1-7, as well as the reference characters contained therein, is also retained. The method of the invention is defined by claim 1 and further depicted in fig.8,9.

Representative embodiments are more completely described and depicted in the following detailed description and the accompanying drawings.

### BRIEF DESCRIPTION OF THE DRAWINGS

FIG. 1 is a schematic side view of tank or reservoir containing a liquid associated with an industrial process on the surface of which has accumulated a layer of foam that is being sprayed and displaced from left to right by first and second fluid-spray sources;
FIG. 2 shows two illustrative fluid-spray sources and their associated spray patterns: (a) representing a conical spray pattern and (b) representing a "flat," relatively planar spray pattern;
FIG. 3 is a top-down schematic view of a reservoir of liquid having a build-up of foam thereon and of a foam control system including three fluid-spray sources for subsiding and displacing the foam along a non-cyclic foam-displacement path and into a drain that is in fluid communication with the reservoir;
FIG. 4 is a top-down schematic view of a reservoir of liquid having a build-up of foam thereon and of a foam control system including four fluid-spray sources for subsiding and displacing the foam along a non-cyclic foam-displacement path and into a drain that is in fluid communication with the reservoir;
FIG. 5 is a top-down schematic view of a foam control system implemented in association with a potato processing facility that includes a potato washing drum partially immersed in a reservoir of water defined by an industrial wash table;
FIG. 6 is a top-down schematic view of a foam control method employing a cyclic foam-displacement path;
FIG. 7 is a side-view schematic depicting a foam control system including fluid-spray sources directed in opposition to a foam-displacement direction;
FIG. 8 shows a top view of a foam abatement system; and
FIG. 9 is regarded primarily as cross-sectional side view of the foam abatement system of FIG. 8, but is also discussed in the context of alternative configurations.

### DETAILED DESCRIPTION

The following description of variously configured and implemented foam control and foam abatement systems and methods is demonstrative in nature and is not intended to limit the invention or its application of uses. Accordingly, the various implementations, aspects, versions and embodiments described in the summary and detailed description are in the nature of non-limiting examples falling within the scope of the appended claims and do not serve to restrict the maximum scope of the claims.

Shown in FIGS. 1-6 are various aspects of a foam control system **10** for subsiding and displacing foam **15** resulting from an industrial process and accumulating on an upper surface **22** of a liquid **20** associated with that industrial process. For ease of reference and brevity, the liquid **20** associated with the industrial process is alternatively referred to, interchangeably, as "industrial-process liquid **20,"** with the same reference character **20** being used in association with either textual descriptor for the liquid **20.**

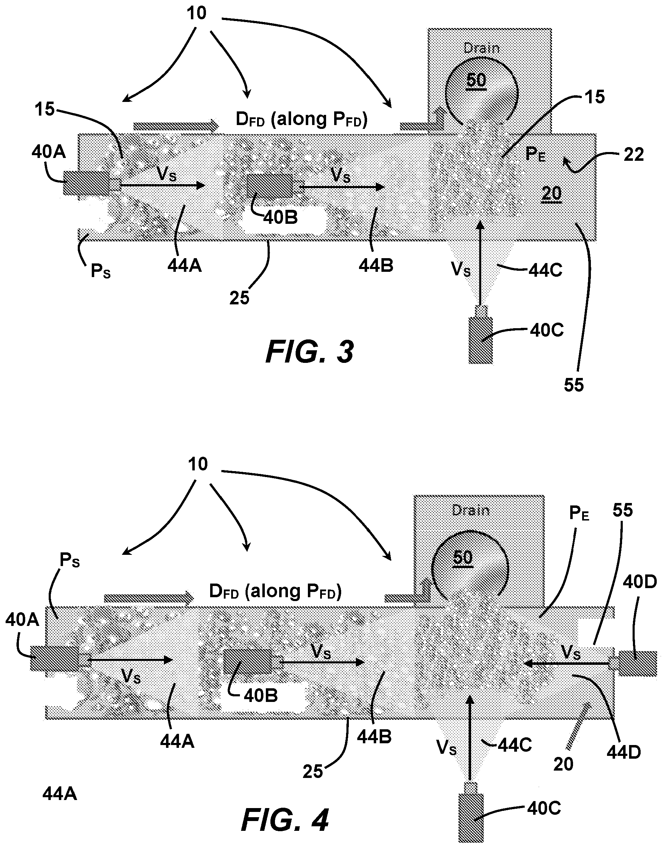

In order to provide an illustrative context and environment in association with which variations of the system **10** may be employed, alternative implementations are described with principal reference to FIGS 1, 3, 4, and 5, in each of which there is depicted a tank or reservoir **25** for containing the industrial-process liquid **20** As indicated in the summary, the relevant industrial-process liquid **20** may comprise water. In FIG. 1, a schematic side view of an illustrative processing environment is depicted, while FIGS. 3, 4 and 5 provide top-down schematic views of alternatively configured processing environments.

As illustrated in each of FIGS. 1 and 3-5, implementations of the foam control system **10** and associated method require establishment of a foam-displacement path **P_{FD}** along which foam **15** resulting from a relevant industrial process is to be displaced. Also established is a foam-displacement direction **D_{FD}** along the foam-displacement path **P_{FD}** in which resultant foam **15** is to be displaced as the foam **15** accumulates on the surface **22** of the industrial-process liquid **20.** Both the foam-displacement path **P_{FD}** and the path direction **D_{P}** are indicated by arrows within the relevant drawings.

Referring still to FIGS. 1 and 3-5, a set of fluid-spray sources **40** is provided that includes at least first and second fluid-spray sources **40A** and **40B,** but can include additional fluid-spray sources **40C, 40D, 40E,** etc. In each of the drawings, the fluid-spray sources are denoted by reference characters including the same numeric element **"40,"** but are distinguished from each other in that each is denoted, within each drawing, by a distinct alphabetic element (e.g., **"A," "B," "C,"** etc.). Moreover, when the fluid-spray sources **40** are referred to collectively, or there is otherwise no need to refer to any of them in particular, only the "base" numeric element is used. Moreover, elements of other aspects of the system **10,** such as spray patterns **44,** are numbered using a similar alphanumeric convention as indicated.

The fluid-spray sources **40** are serially arranged above the surface **22** of the industrial-process liquid **20.** Each fluid-spray source **40** as the capacity to selectively eject under pressure a foam-subsiding fluid **F_{FS}.** Moreover, each fluid-spray source **40** is configured such that foam-subsiding fluid **F_{FS}** ejected therefrom is sprayed in a spray pattern **44** that is centered about a spray axis **A_{S}**. Illustrative spray patterns **44** are shown in FIG. 2 and discussed below.

Regardless of its general configuration (e.g., planar or conical), each spray pattern **44** is representable by a spray vector **V_{S}** extending along the spray axis **A_{S}** about which that spray pattern **44** is centered. As depicted most clearly in the example represented by the schematic side view of FIG. 1, each fluid-spray source **40** is oriented such that its associated spray vector **V_{S}** has (i) a non-zero component of spatial extension directed perpendicularly to, and downwardly toward, the industrial-process liquid and (ii) a non-zero component of spatial extension directed parallel to the surface **22** of the industrial-process liquid **20** and in the foam-displacement direction **D_{FD}.** In plainer terms, this simply indicates that each fluid-spray source **40** is angularly oriented such that its associated spray vector **V_{S}** is neither entirely perpendicular nor entirely parallel to the surface **22** of the industrial-process liquid **20.**

For ease of identification and further discussion, the horizontal component of a spray vector **Vs** (i.e., the spatial-extent component of non-zero magnitude that is parallel to the surface **22** of the industrial-process liquid **20)** is denoted by a dashed arrow labeled with the alphanumeric reference character **V_{S-X}.** In keeping with this Cartesian notation convention, the vertical component of a spray vector **V_{S}** (i.e., the spatial-extent component of non-zero magnitude that is perpendicular, or "orthogonal," to the surface **22** of the industrial-process liquid **20)** is denoted by a dashed arrow labeled with the alphanumeric reference character **V_{S-Y}.** Of course, it will be readily appreciated that the ratio **V_{S-Y} / V_{S-X}** is directly related (by the trigonometric function "tangent") to the spray-source orientation angle **θ** at which the spray vector **V_{S}** is pitched relative to horizontal. Nevertheless, the ratio **V_{S-Y} / V_{S-X}** itself is an important factor to conceptualize in relation to the functionality of various implementations and may vary among locations along the foam-displacement path **P_{FD}.** Presently, relative to various implementations, it is sufficient to observe in very general terms that, of the two spatial-extent components, the vertical component **V_{S-Y}** is principally responsible for subsiding foam **15,** while the horizontal component **V_{S-X}** is principally responsible for moving the foam **15** along the surface **22** of the industrial-process liquid **20** in the foam-displacement direction **D_{FD}.** Accordingly, implementations of the foam control system **10** are most efficient when the ratio **V_{S-Y} / V_{S-X}** is optimized at each fluid-spray source **40** for both the foam-subsiding and foam-displacement factors simultaneously.

With broader reference once again to FIGS. 1 and 3-5, when an implementation of the foam control system **10** is in use, foam-subsiding fluid **F_{FS}** is ejected from the fluid-spray sources **40** such that foam **15** impacted by foam-subsiding fluid **F_{FS}** ejected from the first fluid-spray source **40A** is wetted, partially subsided and displaced in the foam-displacement direction **D_{FD}** toward the spray being ejected from the second fluid-spray source **40B** by which the foam **15** is further wetted, subsided and displaced in the foam-displacement direction **D_{FD}.** When three or more fluid-spray sources **40** are deployed, foam **15** initially displaced by the first fluid-spray source **40A** is displaced toward, under, then through the spray pattern **44** associated with each successive fluid-spray source **40** along the foam-displacement path **P_{FD},** thereby being further wetted, subsided and displaced in the foam-displacement direction **D_{FD}** along the foam-displacement path **P_{FD}.** From the aforesaid, it will be readily appreciated that the serial arrangement of the fluid-spray sources **40** defines the foam displacement path **P_{FD}** and that the volume of the foam **15** is reduced as the foam **15** is displaced along the foam-displacement path **P_{FD}.** Implementations of the foam control system **10** treat foam control in a holistic manner, rather than regarding foam control as a localized issue to be treated by selective "knock down" or chemical treatment as problematic accumulation arises. In implementations of the present system and method, foam **15** is subsided and displaced in a continuous manner along the predefined foam-displacement path **P_{FD}.**

As discussed in the summary, as well as above in the detailed description relative specifically to the spray-source orientation angle **θ** and the ratio **V_{S-Y} / V_{S-X},** the reduction in the volume of foam **15** as the foam **15** is impacted and displaced by foam-subsiding fluid **F_{FS}** is a function of one or more alternative factors. In addition to those factors already discussed, foaming conditions of the specific industrial processing setting within which the foam control system **10** and method is implemented determines parameters for each fluid-spray source **40.** In addition to the spray-source orientation angle **θ**, other important parameters include (i) the height **H** of each fluid-spray source **40** above the upper surface **22** of the industrial-process fluid **20,** (iii) the configuration of the spray pattern **44,** (iv) the spray droplet size, and (v) the force with which the spray impacts the foam **15** and the surface **22** of the industrial-process liquid **20.** Such parameters are selected with the objective of optimizing foam-condensation efficiency and movement (flow rate) of the condensed foam **15,** while minimizing the creation of additional foam **15** due to the spray impact on the surface **22** of the industrial-process liquid **20.**

In various settings, minimizing the spray-source orientation angle **θ** works favorably for all desired effects. Lower spray-source orientation angles **θ** tend to increase the effective cross-sectional area of the spray pattern **44**, especially for "full" spray patterns (e.g., a filled or full conical spray pattern), thus increasing the area of foam **15** that is impacted for condensation. Moreover, as the spray-source orientation angle **θ** is decreased, the "forward thrust" component of the spray force (i.e., along the **V_{S-X}** component of the spray vector **V_{S})** increases, thus facilitating the movement of the condensed foam **15** along the foam-displacement path **P_{FD}.**

In one illustrative implementation, at least the first fluid-spray source **40A** ejects a "full spray" spray pattern **44A.** A non-limiting illustrative example of a "full spray" spray pattern **44** is shown in the left side portion of FIG. 2 designated as "(a)." In this particular example, the spray pattern **44** has a generally conical configuration. The spray pattern **44** is regarded as "full" because (i) its interior is occupied by jets or sprays of foam-subsiding fluid **F_{FS}** and/or (ii) because it not a "flat spray," an example of which is shown in the right side portion of FIG. 2 designated as "(b)." In contrast, a "hollow" spray pattern **44** of conical configuration would include jets of foam-subsiding fluid **F_{FS}** only at the outside; those necessary to define the cone, while the interior would include no jets of foam-subsiding fluid **F_{FS},** at least not by design. A full spray pattern **44** is a preferable choice for the first fluid-spray source **40A** in various implementations because such sprays have a high cross-sectional area (dense with water jets) and, therefore, effectively cover and condense higher-volume "dry" foam **15** that manifests nearer the beginning of the foam-displacement path **P_{FD}.**

Referring to the right side portion of FIG. 2 designated as "(b)," a so-called "flat" spray pattern **44** is shown. Flat spray patterns **44** are more suited for implementation from fluid-spray sources **40** subsequent to the first fluid-spray source **40A.** This is because foam **15** arriving toward spray patterns **44** subsequent to that issuing from the first fluid-spray source **40A** has already been partially condensed and, therefore, has a reduced volume. Flatter spray patterns **44** can effectively cover the reduced-volume foam **15** and effectively displace it in the foam-displacement direction **D_{FD}** since their associated spray vectors **V_{S}** can have horizontal components **V_{S-X}** much greater in magnitude than their vertical components **V_{S-Y}.** Of course, these are provided only as edifying, illustrative examples, and local foaming conditions and structural geometries may be better suited to alternative spray types, locations, and spray-source orientation angles **θ.**

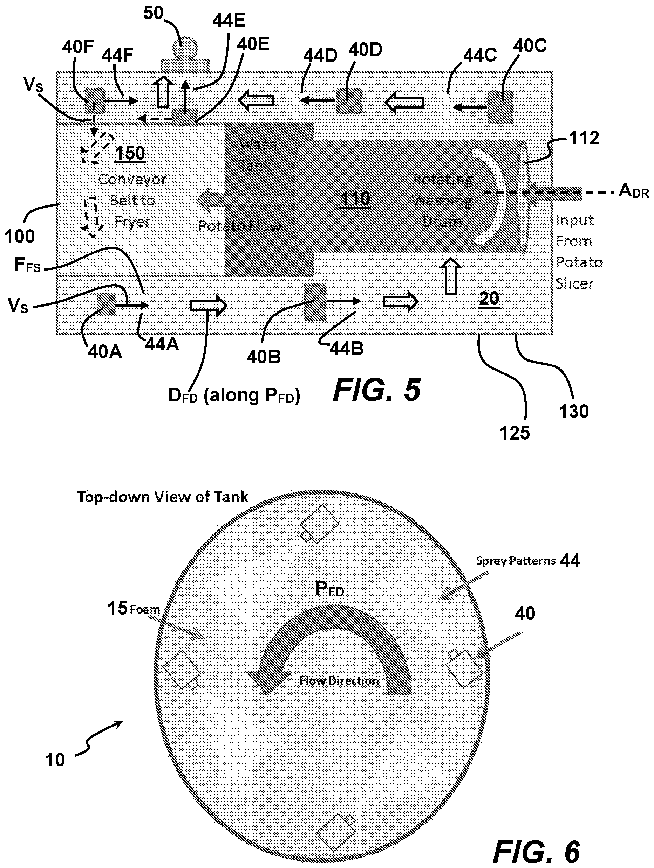

As described in the summary, alternative implementations of a chemical-free foam control system **10** employ "non-cyclic" and "cyclic" foam-displacement paths **P_{FD}.** Included in FIGS. 1, 3 and 4 are schematic depictions of non-cyclic foam-displacement paths **P_{FD},** while FIG. 5 shows a system **10** that can be switch between cyclic and non-cyclic foam-displacement paths **P_{FD}.** FIG. 6 is a top-down schematic view of a reservoir **25,** fluid-spray sources **40,** and spray patterns **44** defining a cyclic foam-displacement path **P_{FD}.**

An aspect common to systems **10** implementing non-cyclic or cyclic foam-displacement paths **P_{FD}** is that there is a path start **P_{S}** corresponding to a first fluid-spray source **40A** and a path end **P_{E}** corresponding to a last or final fluid-spray source **40.** In a non-cyclic implementation, such as those of FIGS. 1, 3 and 4, the path end **P_{E}** is distinct from the path start **P_{S},** and it will generally be apparent which fluid-spray source **40** is the first and which is the last along the foam-displacement path **P_{FD}.** In contrast, a cyclic implementation, such as that depicted in FIG. 6, is one in which foam **15** displaced to the path end **P_{E}** corresponding to the last fluid-spray source **40** is further displaced by the last fluid-spray source **40** toward the path start **P_{S}** corresponding to the first fluid-spray source **40.** Because, in a cyclic system **10,** the foam-displacement path **P_{FD}** is essentially a "closed loop," which fluid-spray source **40** is regarded as the first fluid-spray source **40A** may be arbitrary. However, once the first fluid-spray source **40A** is designated, the last fluid-spray source **40** would typically be regarded as the fluid-spray source **40** immediately "behind" the fluid-spray source **40** designated as "first" relative to the foam-displacement direction **D_{FD}.**

Referring again specifically to FIG. 1, a simple foam control system **10** employing only first and second fluid-spray sources **40A** and **40B** defining a lineal foam-displacement path **P_{FD}** is depicted in a side-view schematic. In this example, it can be seen that the first fluid-spray source **40A** corresponding to the path start **P_{S}** is pitched at a fluid-spray orientation angle **θ** and has an associated vertical component **V_{S-Y}** sufficiently large for its spray-pattern **44A** to wet and subside the build-up of drier and more-highly-stacked foam **15** nearest the path start **P_{S},** while still having a horizontal component **V_{S-X}** sufficiently large to displace the partially-subsided foam toward the spray pattern **44B** issuing from the second fluid-spray source **40B.** The spray pattern **44B** associated with the second fluid-spray source **40B** further subsides the foam **15** and displaces it toward a drain **50** adjacent the path end **P_{E},** and in-line with the foam-displacement path **P_{FD}.** Because the foam **15** being impacted by the spray pattern **44B** associated with the second fluid-spray source **40B** arrives partially subsided, the spray vector **V_{S}** associated with the second fluid-spray source **40B** has a larger horizontal component **V_{S-X}** and smaller vertical component **V_{S-Y}** than the spray vector **V_{S}** associated with the first fluid-spray source **40A,** consistent with the discussion in preceding paragraphs addressing spray patterns **44** and spray-source orientation angles **θ.**

FIGS. 3 and 4 are top-down schematic views of two similar foam control systems **10** in nearly-identical industrial process settings which, like the setting in FIG. 1, include reservoirs **25** for containing industrial-process liquid **20.** In each of the cases of FIGS. 3 and 4, the foam-displacement path **P_{FD}** defined by the fluid-spray sources **40** is both non-cyclic and non-lineal. Moreover, each includes a drain **50** for receiving industrial-process liquid **20** and any remaining, non-subsided foam **15.** However, in contrast to the setting of FIG. 1, the drain **50** in each of FIGS. 3 and 4 is not "in-line" with the predominant foam-displacement path **P_{FD}.** More specifically, after extending in a first lineal direction - left-to-right in each of FIGS. 3 and 4 -- for some distance, the foam-displacement path **P_{FD}** is diverted to the left by a third fluid-spray source **40C** that is aimed orthogonally to the previous portion of the foam-displacement path **P_{FD}** defined by first and second fluid-spray sources **40A** and **40B.** This diversion in the direction of the foam displacement path **P_{FD}** facilitates delivery of subsided foam **15** to the drain **50** situated to the left side of the reservoir **25.**

Referring still to FIGS. 3 and 4, each reservoir **25** includes a "dead zone" **55** where foam **15** would, under normal conditions, collect and overflow the reservoir **25** in that region. This is a scenario worth addressing because such dead zones **55** are common in existing industrial process settings. To counter the build-up of foam **15** in the dead zone **55,** the implementation of FIG. 4 differs from that of FIG. 3 in that the implementation of FIG. 4 further includes a fluid-spray source **40D** directed outwardly from the dead zone **55** and toward the fluid-spray source **40C** that directs foam **15** into the drain **50.**

FIG. 5 is a top-down schematic view of a foam control system **10** implemented in association with a potato processing facility **100.** While extensive detail relative to the potato processing facility **100** is not critical, some detail is warranted for purposes of providing context. The potato processing facility **100** includes a screened, rotatable potato wash drum **110** partially immersed in a reservoir **125** of industrial-process liquid **20.** In this setting, the reservoir **125** is a wash tank that is part of an industrial wash table **130,** and the industrial-process liquid **20** comprises water. Potato slices (not shown) are fed into the potato wash drum **110,** which is partially immersed in the industrial-process liquid **20** below the drum-rotation axis **A_{DR}.** As the wash drum **110** rotates, the potato slices are tossed about, churned and washed by the industrial-process liquid **20** (water) in the reservoir **125.** Washed potato slices then exit the wash drum **110** from which they are carried up by an inclined conveyor **150** for subsequent processing.

As with the examples of the previous schematics, the foam control system **10** employs a plurality of fluid-spray sources **40** which, in the present example, are numbered **44A** thru **44F** using consecutive letters of the alphabet. The system **10** depicted in FIG. 5 can be operated alternatively in a cyclic or non-cyclic fashion, depending on the selective operation and orientation of fluid-spray sources **40E** and **40F.**

In either a cyclic or non-noncyclic operative mode, foam **15** (omitted in this drawing for clarity) is moved along the foam-displacement path **P_{FD}** from the path start **P_{S}** near fluid-spray source **40A** toward fluid-spray source **40D.** In either case, the foam **15** is moved in a non-lineal way and, in this particular setting, its movement is enhanced by the rotation of the partially-immersed wash drum **110** which, when viewed from the wash-drum input end **112,** rotates counter-clockwise, thereby conveying foam **15** sprayed by fluid-spray source **40B** on one side of the drum-rotation axis **A_{DR}** toward fluid-spray source **40C** located on the opposite side of the drum-rotation axis **A_{DR}.**

In order to operate the system **10** of FIG. 5 in a non-cyclic mode, fluid-spray source **40E** is oriented so as to direct toward drain **50** foam arriving from the region of fluid-spray source **40D.** In this mode, fluid-spray source **40F** can either be turned off or it can be directed to spray foam-subsiding fluid **F_{FS}** back toward fluid-spray source **40E** in much the same manner that fluid-spray source **40D** is directed back toward fluid-spray source **40C** in FIG. 4. Alternatively, in an illustrative cyclic operative mode, fluid-spray source **40F** can be directed to spray foam-subsiding fluid **F_{FS}** toward fluid-spray source **40A** in order to move any remaining non-subsided foam **15** under the conveyor **150** toward fluid-spray source **40A.** Moreover, fluid-spray source **40E** can either be turned off or directed to spray foam-subsiding fluid **F_{FS}** toward fluid-spray source **40F.** In FIG. 5, the illustrative non-cyclic foam-displacement path **P_{FD}** is indicated by solid-line arrows, while the alternative cyclic foam-displacement path **P_{FD}** is indicated by a combination of solid-line arrows where the paths are the same and dashed-outline arrows where the cyclic path deviates from the non-cyclic foam-displacement path **P_{FD}.** Additionally, the spray vectors **V_{S}** associated with fluid-spray sources **40E** and **40F** for the cyclic scenario are indicated in dashed-line arrows.

FIG. 6 is a top-down schematic showing a foam control system **10** and associated method employing a cyclic foam-displacement path **P_{FD}.** FIG. 6 schematically represents one mode in which the foam control system **10** of FIG. 5 can operate, but such a cyclic system can also be employed outside of the processing line. For instance, foam **15** exiting a processing area through drains **50** such as those shown in FIGS. 1 and 3-5 could be channeled to a tank (not shown) in which a cyclic foam-displacement path **P_{FD}** is configured to further subside foam **15** after its removal from the in-line industrial-processing area, and before it is permitted to drain out into a central drainage system, such as public works. Elements of the system **10,** even those not specifically discussed in this paragraph (e.g. fluid-spray sources **40),** are numbered in a manner consistent with the previous numbering convention used throughout the detailed description.

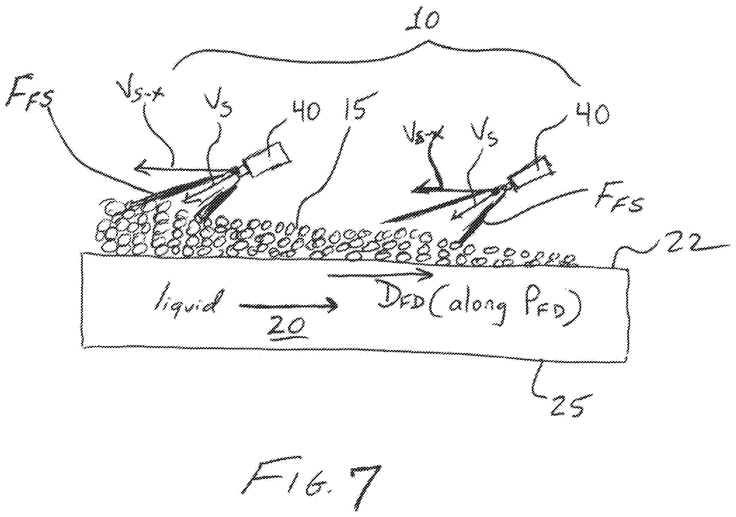

While illustrative implementations discussed above focused principally on scenarios in which the horizontal component **V_{S-X}** of each spray vector **V_{S}** is directed in the foam-displacement direction **F_{FD},** there are within the scope and contemplation of the invention alternative versions in which the **V_{S-X}** component of each spray vector **V_{S}** is directed in opposition to the foam-displacement direction **D_{FD}.** For instance, shown in FIG. 7 is a case in which the industrial-process liquid **20** is itself being moved by a force other than that incidentally imparted by the foam-subsiding fluid **F_{FS},** the moving industrial-process liquid **20** may carry the foam **15** along the foam-displacement path **P_{FD}** and in the foam-displacement direction **D_{FD}.** Such other forces might include gravity or impellors or fluid-moving jets under the surface **22** of the industrial-process liquid **20.** In such cases, the serially arranged fluid-spray sources **40** still subside the foam **15** in a sequential manner, but the horizontal components **V_{S-X}** of their spray vectors **V_{S}** are not responsible for moving the foam **15** along the oppositely-directed foam-displacement direction **D_{FD}.** Instead, each successive fluid-spray source **40** along the foam-displacement path **P_{FD}** partially subsides the foam **15** which foam **15** is carried by the flowing industrial-process liquid **20** toward the next successive fluid-spray source **40** that is spraying in a direction opposed to the flow of the industrial-process liquid **20.** While systems that eject foam-subsiding fluid **F_{FS}** in opposition to the flow of the industrial-process liquid **20** are envisioned as a special case, a setting in which such a system might be used is one in which the industrial-process liquid **20** is being drawn by gravity down an inclined flume (not shown) and the movement of the industrial-process liquid **20** is sufficiently energetic to carry with it the successively-subsiding foam **15** in opposition to the sprays of foam-subsiding fluid **F_{FS}** issuing from the fluid-spray sources **40.**

To this point, the detailed description has addressed foam control systems **10** in which foam **15** is moved along a foam-displacement path **P_{FD}** with an intentional non-zero net velocity relative to the underlying industrial-process liquid **20** on which the foam **15** is accumulating and floating. Attention is now turned to the alternative, and conceptually distinct, methods in which foam is trapped and subsided by continuous impingement by sprayed foam-subsiding fluid **F_{FS}** within a foam-depletion zone configured to minimize the net velocity of foam **15** relative to the underlying industrial-process liquid **20.** However, because it is envisioned that both system types will be used in conjunction with one another, the latter type of system is described with initial reference to a schematic in which both systems are illustrated.

The schematic top-down view representation of FIG. 8 is very similar to that of FIG. 3. Accordingly, all of the reference numbers pertaining to the system of the `779 patent are retained and refer to the like elements, as are the reference numbers referring to environmental aspects, such as the foam **15** and the industrial-process liquid **20.** Moreover, in order to facilitate conceptual clarity between the previous system and method of the `779 patent and the system and method of the present application, it is noted that in referencing components illustrative of the previous foam control system reference numbers lower than "100" were used. In connection with an illustrative environment comprising a potato washing facility **100,** reference numbers in the low "100s" were used. For components illustrative of the present system, reference numbers of "200" and greater are employed. Moreover, for purposes of the differentiation in the detailed description, the system of the `779 patent is referred to as "foam control system **10,"** while the present system is referred to as "foam abatement system **210."**

A principal difference between FIG. 3 and FIG. 8 is that, while in FIG. 3 residual foam **15** is being directed to a drain **50,** in FIG. 8 the residual foam **15** is being directed through a connecting channel **205** to a foam abatement system **210** illustrative of the present invention. The foam abatement system **210** includes a tank or reservoir **225** for containing industrial-process liquid **20.** In alternative implementations, the upper surface **22** of industrial-process liquid **20** contained by the reservoir **225** of the foam abatement system **210** may be at the same elevation as the upper surface **22** of industrial-process liquid **20** contained by the reservoir **25** of the foam control system **10.** Alternatively, the upper surface **22** of industrial-process liquid **20** in the reservoir **225** may be at an elevation lower than the upper surface **22** of industrial-process liquid **20** contained by the reservoir **225,** with there being a drop location **207** between the two systems **10** and **210** within and by which foam **15** and industrial-process liquid **20** cascades under the force of gravity **G** from reservoir **25** to reservoir **225.** In one example, the connecting channel **205** may be downwardly sloped to serve as a drop location **207** and achieve the cascade, an alternative scenario indicated in FIG. 8. In other cases, there may be a stepped drop location **207** between one or both of (i) the reservoir **25** and the connecting channel **205** and (ii) the connecting channel **205** and the reservoir **225.**

Regardless of any elevational disparity between the upper surface **22** of the industrial-process liquid **20** in the reservoirs **25** and **225,** as residual foam **15** is delivered to the foam abatement system **210,** it accumulates on the upper surface **22** of the industrial-process liquid **20** along a horizontal liquid-surface plane **P_{LS}** corresponding to the upper surface **22.** Implementations of the method include designating a foam-depletion zone **230** within which residual foam **15** resulting from the industrial process is situated. In various implementations, the foam-depletion zone **230** has defined in association therewith a depletion-zone perimeter **232** and, inwardly of the depletion-zone perimeter **232,** a depletion-zone center region **234** that, in various implementations, includes a geometric center **235** of the foam-depletion zone **230.** In this particular case, the depletion-zone perimeter **232** coincides with the single tank-side wall **226** of the illustrative reservoir **225** depicted.

A set of fluid ejectors **240** is provided that, at least in their individual configurations, but not in their mutual arrangement and alignment, may generally correspond to the fluid-spray sources **40** associated with the foam control system **10.** In the non-limiting illustrative case of FIG. 8, the fluid ejectors **240** include fluid ejectors **240A, 240B, 240C,** and **240D.** In each of the drawings, the fluid ejectors are denoted by reference characters including the same numeric element **"240,"** but are distinguished from each other in that each is denoted, within each drawing, by a distinct alphabetic element (e.g., **"A," "B," "C,"** etc.). Moreover, when the fluid ejectors **240** are referred to collectively, or there is otherwise no need to refer to any of them in particular, only the "base" numeric element is used. Moreover, elements of other aspects of the system **210,** such as spray patterns **244,** are numbered using a similar alphanumeric convention as indicated.

As with the fluid-spray sources **40,** each fluid ejector **240** is configured to selectively eject a foam-subsiding fluid **F_{FS}** under pressure in a spray pattern **244** that is representable by a spray vector **V_{S}.** Moreover, the spray pattern **244** is typically centered about a spray axis **A_{S}** along which the spray vector **V_{S}** extends. The full discussion of the spray vectors **V_{S}** associated with the fluid-spray sources **40,** and the spray patterns **44** emitted therefrom, applies with equal validity to the nature of the spray vectors **V_{S}** associated with the fluid ejectors **240,** and the spray patterns **244,** emitted therefrom. Accordingly, further discussion of same is omitted for purposes of efficiency and brevity.

With reference to FIG. 8, as well as the cross-sectional / side view of FIG. 9 showing fluid ejectors **240B** and **240D** of FIG. 8, the fluid ejectors **240** are peripherally disposed above the liquid-surface plane **P_{LS}** and, in the case of FIG. 8, about the depletion-zone perimeter **232.** In this way, the fluid ejectors **240** are at a higher elevation than residual foam **15** that is situated within the bounds of the depletion-zone perimeter **232** and on the upper surface **22** of the industrial-process liquid **20.**

In addition to their peripheral disposition, and as seen perhaps best in FIG. 9, the fluid ejectors **240** are mutually arranged so that they are inwardly and downwardly directed toward the depletion-zone center region **234.** Illustratively, each of the fluid ejectors **240** is oriented such that the spray vector **Vs** associated therewith has (i) a non-zero vertical component **V_{S-Y}** of spatial extension directed perpendicularly to, and downwardly toward, the liquid-surface plane **P_{LS}** and (ii) a non-zero horizontal component **V_{S-X}** of spatial extension directed parallel to the liquid-surface plane **P_{LS}.** Additionally, the non-zero horizontal component **V_{S-X}** of each spray vector **V_{S}** is directed inwardly of the depletion-zone perimeter **232** and toward the depletion-zone center region **234.** By these orientations of their corresponding spray vectors **V_{S},** the spray patterns **224** collectively constrain within the foam-depletion zone **230** and, more particularly, within the depletion-zone center region **234,** foam **15** situated within the foam-depletion zone **230** for sustained impingement by the spray patterns **244.**

In the example of FIG. 8, the foam-abatement system **210** is separately discernable from the foam control systems **10** in which foam **15** is moved along a foam-displacement path **P_{FD}** in the sense that the foam abatement system **210** of FIG. 8 includes a separate reservoir **225,** not "in-line" with the foam control system **10** and the predominant foam-displacement path **P_{FD},** defined thereby, to which residual foam **15** accumulated within the "main-line" foam control system **10** is diverted for abatement. However, it is to be understood that within the contemplation of the invention as captured within the scope of at least some of the claims, are implementations in which the foam abatement system **210** is "in-line" with a foam control system **10.** For example, along the foam-displacement path **P_{FD}** defined by fluid-spray sources **40,** there could be defined or designated one or more foam-depletion zones **230** within which residual foam **15** resulting from the industrial process is situated.

In one such arrangement, fluid ejectors **240** disposed in mutual opposition, and peripherally of the foam-displacement path **P_{FD}** defined by fluid-spray sources **40,** eject foam-subsiding fluid **F_{FS}** perpendicularly to the foam-displacement path **P_{FD}** toward the center of the foam-displacement path **P_{FD}.** In such a case, the depletion-zone center region **234** would be toward the center of the foam-displacement path **P_{FD}.** While FIG. 9 was originally introduced as a cross-sectional / side view of FIG. 9 showing fluid ejectors **240B** and **240D** of FIG. 8, the arrangement presently under discussion can be explained and conceptualized with reference to FIG. 9, thereby obviating the need for a separate drawing. An "in-line" foam-depletion zone **230** can be envisioned with reference to FIG. 9 by imagining the view of FIG. 9 as a cross-sectional view taken across, for example, the reservoir **25** and foam-displacement path **P_{FD}** shown in FIGS. 3, 4, or even 8, for example. More specifically, if FIG. 9 is envisioned as a cross-sectional view taken perpendicular to the foam-displacement path **P_{FD},** with the flow direction being into or out of the drawing sheet, then fluid ejectors **240B** and **240D** are adequately illustrative of a foam-depletion zone **230** in-line with the predominant foam-displacement path **P_{FD},** with the fluid ejectors **240** disposed in mutual opposition and peripherally of the foam-depletion zone **230.** Moreover, they are ejecting spray patterns **244B** and **244D** depletion-zone center region **234** which, it can be readily appreciated, would be toward the center of the foam-displacement path **P_{FD}**.

## Claims

1. A method of subsiding foam (15) resulting from an industrial process and accumulating on the surface (22) of an industrial-process liquid (20) associated with that industrial process along a horizontal liquid-surface plane corresponding to the surface of the industrial-process liquid, the method comprising:
designating a foam-depletion zone within which residual foam resulting from the industrial process is situated, the foam-depletion zone having defined in association therewith a depletion-zone center region;
providing a set of fluid ejectors (240) including at least first and second fluid ejectors from each of which fluid ejectors a foam-subsiding fluid can be selectively ejected under pressure in a spray pattern (244) representable by a spray vector (Vs);
arranging the fluid ejectors above and peripherally of residual foam situated within the foam-depletion zone and on the surface of the industrial-process liquid;
orienting each of the fluid ejectors such that the spray vector associated therewith has (i) a non-zero vertical component of spatial extension directed perpendicularly to, and downwardly toward, the liquid-surface plane and (ii) a non-zero horizontal component of spatial extension directed (a) parallel to the liquid-surface plane, (b) inwardly toward the depletion-zone center region so as to constrain within the foam-depletion zone, by action of the spray patterns collectively emanating from the fluid ejectors, foam situated within the foam-depletion zone for sustained impingement by the spray patterns collectively emanating from the fluid ejectors, and (c) in opposition to the non-zero horizontal component of spatial extension associated with the other the first and second fluid ejectors;
establishing a foam-displacement direction and a predominant foam-displacement path along which foam resulting from the industrial process is to be displaced as the foam accumulates on the surface of the industrial-process liquid;
providing a set of fluid-spray sources (40) including at least first and second fluid-spray sources from which a foam-subsiding fluid can be selectively ejected under pressure;
arranging the fluid-spray sources serially above the surface of the industrial-process liquid, and orienting each fluid-spray source, such that foam-subsiding fluid ejected from each fluid-spray source is sprayed in a spray pattern (44) that is centered about a spray axis and representable by a spray vector extending along the spray axis (As) and having (i) a non-zero component of spatial extension directed perpendicularly to, and downwardly toward, the liquid associated with the industrial process and (ii) a non-zero component of spatial extension directed parallel to the surface of the liquid associated with the industrial process and in the foam-displacement direction (D_{FD}), wherein the serial arrangement of the fluid-spray sources defines the predominant foam displacement path; and
ejecting foam-subsiding fluid from the fluid-spray sources such that foam impacted by foam-subsiding fluid ejected from the first fluid-spray source is wetted, partially subsided and displaced in the foam-displacement direction toward the spray being ejected from the second fluid-spray source by which the foam is further wetted, subsided and displaced in the foam-displacement direction;
wherein the residual foam resulting from the industrial process is directed to the foam-depletion zone as part of an overall foam-subsiding method.

2. The method of claim 1 wherein there is defined at least one foam-depletion zone that is in-line with the predominant foam-displacement path.

3. The method of claim 2 wherein there is furthermore defined at least one foam-depletion zone separately discernable from, and not in-line with, the predominant foam-displacement path.

4. The method of any preceding claim wherein there is defined at least one foam-depletion zone separately discernable from, and not in-line with, the predominant foam-displacement path.

5. The method of any preceding claim wherein (i) the set of fluid ejectors comprises at least three fluid ejectors arranged peripherally about the foam-depletion zone.

## Patentansprüche

1. Verfahren zum Reduzieren von aus einem industriellen Prozess resultierendem Schaum (15), der sich auf der Oberfläche (22) einer mit diesem industriellen Prozess verbundenen industriellen Prozessflüssigkeit (20) entlang einer horizontalen Flüssigkeitsoberflächenebene entsprechend der Oberfläche der industriellen Prozessflüssigkeit ansammelt, das Verfahren umfassend:
Bestimmen einer Schaumabbauzone, in der sich der aus dem industriellen Prozess resultierende Restschaum befindet, wobei die Schaumabbauzone in Verbindung damit einen Abbauzonen-Mittelbereich umgrenzt;
Bereitstellen eines Satzes von Flüssigkeitsejektoren (240), der zumindest einen ersten und einen zweiten Flüssigkeitsejektor umfasst, wobei aus jedem dieser Flüssigkeitsejektoren eine schaumreduzierende Flüssigkeit selektiv unter Druck in einem Sprühmuster (244) ausgestoßen werden kann, das durch einen Sprühvektor (Vs) darstellbar ist;
Anordnen der Flüssigkeitsejektoren über und peripher des Restschaums, der sich innerhalb der Schaumabbauzone und auf der Oberfläche der industriellen Prozessflüssigkeit befindet;
Ausrichten jedes der Flüssigkeitsejektoren derart, dass der damit verbundene Sprühvektor (i) eine vertikale Komponente der räumlichen Ausdehnung ungleich Null aufweist, die senkrecht zu und nach unten in Richtung der Flüssigkeitsoberflächenebene gerichtet ist, und (ii) eine horizontale Komponente der räumlichen Ausdehnung ungleich Null aufweist, die (a) parallel zu der Flüssigkeitsoberflächenebene (b) nach innen in Richtung des Abbauzonen-Mittelbereichs, um innerhalb der Schaumabbauzone durch die Wirkung der gemeinsam aus den Flüssigkeitsejektoren austretenden Sprühmuster, innerhalb der Schaumabbauzone befindlichen Schaum zum anhaltenden Auftreffen durch die gemeinsam aus den Flüssigkeitsejektoren austretenden Sprühmuster zu begrenzen, und (c) entgegen der horizontalen Komponente der räumlichen Ausdehnung ungleich Null, die mit dem ersten und zweiten Flüssigkeitsejektor verbunden ist, gerichtet ist;
Einrichten einer Schaumverdrängungsrichtung und eines vorrangigen Schaumverdrängungsweges, entlang dessen der aus dem industriellen Prozess resultierende Schaum verdrängt werden soll, wenn sich der Schaum auf der Oberfläche der Flüssigkeit des industriellen Prozesses ansammelt;
Bereitstellen eines Satzes von Flüssigkeitssprühquellen (40), die zumindest eine erste und eine zweite Flüssigkeitssprühquelle umfassen, aus denen eine schaumreduzierende Flüssigkeit selektiv unter Druck ausgestoßen werden kann;
Anordnen der Flüssigkeitssprühquellen seriell über der Oberfläche der industriellen Prozessflüssigkeit und Ausrichten jeder Flüssigkeitssprühquelle, sodass von jeder Flüssigkeitssprühquelle ausgestoßene schaumreduzierende Flüssigkeit in einem um eine Sprühachse zentrierten Sprühmuster (44) versprüht wird, das durch einen sich entlang der Sprühachse (As) erstreckenden Sprühvektor darstellbar ist und (i) eine Komponente der räumlichen Ausdehnung ungleich Null aufweist, die senkrecht zu, und nach unten in Richtung der mit dem industriellen Prozess verbundenen Flüssigkeit gerichtet ist, und (ii) eine Komponente der räumlichen Ausdehnung ungleich Null aufweist, die parallel zu der Oberfläche der mit dem industriellen Prozess verbundenen Flüssigkeit und in der Schaumverdrängungsrichtung (D_{FD}) gerichtet ist, wobei die serielle Anordnung der Flüssigkeitssprühquellen den vorrangigen Schaumverdrängungsweg definiert; und
Ausstoßen von schaumreduzierender Flüssigkeit aus den Flüssigkeitssprühquellen, sodass der Schaum, der von der aus der ersten Flüssigkeitssprühquelle ausgestoßenen schaumreduzierenden Flüssigkeit getroffen wird, benetzt wird, sich teilweise reduziert und in der Schaumverdrängungsrichtung in Richtung des aus der zweiten Flüssigkeitssprühquelle ausgestoßenen Sprühnebels verdrängt wird, wodurch der Schaum weiter benetzt, reduziert und in der Schaumverdrängungsrichtung verdrängt wird;
wobei der aus dem industriellen Prozess resultierende Restschaum als Teil eines schaumreduzierenden Gesamtverfahrens in die Schaumabbauzone geleitet wird.

2. Verfahren nach Anspruch 1, wobei zumindest eine Schaumabbauzone definiert ist, die in einer Linie mit dem vorrangigen Schaumverdrängungsweg liegt.

3. Verfahren nach Anspruch 2, wobei darüber hinaus zumindest eine Schaumabbauzone definiert ist, die separat von dem vorrangigen Schaumverdrängungsweg erkennbar ist und nicht in einer Linie mit diesem liegt.

4. Verfahren nach einem der vorhergehenden Ansprüche, wobei zumindest eine Schaumabbauzone definiert ist, die separat von dem vorrangigen Schaumverdrängungsweg erkennbar ist und nicht in einer Linie mit diesem liegt.

5. Verfahren nach einem der vorhergehenden Ansprüche, wobei (i) der Satz von Flüssigkeitsejektoren zumindest drei Flüssigkeitsejektoren umfasst, die peripher um die Schaumabbauzone herum angeordnet sind.

## Revendications

1. Procédé de diminution de mousse (15) résultant d'un processus industriel et s'accumulant sur la surface (22) d'un liquide de processus industriel (20) associé à ce processus industriel le long d'un plan de surface de liquide horizontal correspondant à la surface du liquide de processus industriel, le procédé comprenant :
la désignation d'une zone d'appauvrissement de mousse au sein de laquelle de la mousse résiduelle résultant du processus industriel est située, la zone d'appauvrissement de mousse ayant défini en association avec elle une région centrale de zone d'appauvrissement ;
la fourniture d'un ensemble d'éjecteurs de fluide (240) comportant au moins des premier et deuxième éjecteurs de fluide à partir de chacun desquels un fluide de diminution de mousse peut être éjecté sélectivement sous pression selon un motif de pulvérisation (244) pouvant être représenté par un vecteur de pulvérisation (Vs) ;
l'agencement des éjecteurs de fluide au-dessus et à la périphérie de la mousse résiduelle située au sein de la zone d'appauvrissement de mousse et sur la surface du liquide de processus industriel ;
l'orientation de chacun des éjecteurs de fluide de sorte que le vecteur de pulvérisation associé à ceux-ci ait (i) une composante verticale non nulle d'extension spatiale dirigée perpendiculairement au plan de surface de liquide et vers le bas en direction de celui-ci et (ii) une composante horizontale non nulle d'extension spatiale dirigée (a) parallèlement au plan de surface de liquide, (b) vers l'intérieur en direction de la région centrale de la zone d'appauvrissement de manière à se limiter au sein de la zone d'appauvrissement de mousse, par action des motifs de pulvérisation émanant collectivement des éjecteurs de fluide, la mousse située au sein de la zone d'appauvrissement de mousse pour un impact prolongé par les motifs de pulvérisation émanant collectivement des éjecteurs de fluide, et (c) en opposition à la composante horizontale non nulle d'extension spatiale associée à l'autre des premier et deuxième éjecteurs de fluide ;
l'établissement d'une direction de déplacement de mousse et d'un trajet de déplacement de mousse prédominant le long duquel la mousse résultant du processus industriel doit être déplacée à mesure que la mousse s'accumule sur la surface du liquide de processus industriel ;
la fourniture d'un ensemble de sources de pulvérisation de fluide (40) comportant au moins des première et deuxième sources de pulvérisation de fluide à partir desquelles un fluide de diminution de mousse peut être éjecté sélectivement sous pression ;
l'agencement des sources de pulvérisation de fluide en série au-dessus de la surface du liquide de processus industriel, et l'orientation de chaque source de pulvérisation de fluide, de sorte que du fluide de diminution de mousse éjecté à partir de chaque source de pulvérisation de fluide soit pulvérisé selon un motif de pulvérisation (44) qui est centré autour d'un axe de pulvérisation et peut être représenté par un vecteur de pulvérisation s'étendant le long de l'axe de pulvérisation (As) et ayant (i) une composante non nulle d'extension spatiale dirigée perpendiculairement au liquide associé au processus industriel et vers le bas en direction de celui-ci et (ii) une composante non nulle d'extension spatiale dirigée parallèlement à la surface du liquide associé au processus industriel et dans la direction de déplacement de mousse (D_{FD}), dans lequel l'agencement en série des sources de pulvérisation de fluide définit le trajet de déplacement de mousse prédominant ; et
l'éjection de fluide de diminution de mousse à partir des sources de pulvérisation de fluide de sorte que la mousse frappée par le fluide de diminution de mousse éjecté à partir de la première source de pulvérisation de fluide soit humidifiée, partiellement diminuée et déplacée dans la direction de déplacement de mousse vers la pulvérisation éjectée à partir de la deuxième source de pulvérisation de fluide par laquelle la mousse est davantage humidifiée, diminuée et déplacée dans la direction de déplacement de mousse ;
dans lequel la mousse résiduelle résultant du processus industriel est dirigée vers la zone d'appauvrissement de mousse dans le cadre d'un procédé global de diminution de mousse.

2. Procédé selon la revendication 1, dans lequel il est défini au moins une zone d'appauvrissement de mousse qui est en ligne avec le trajet de déplacement de mousse prédominant.

3. Procédé selon la revendication 2 dans lequel il est en outre défini au moins une zone d'appauvrissement de mousse perceptible séparément du trajet de déplacement de mousse prédominant et non en ligne avec celui-ci.

4. Procédé selon l'une quelconque des revendications précédentes dans lequel il est défini au moins une zone d'appauvrissement de mousse perceptible séparément du trajet de déplacement de mousse prédominant et non en ligne avec celui-ci.

5. Procédé selon l'une quelconque des revendications précédentes dans lequel (i) l'ensemble d'éjecteurs de fluide comprend au moins trois éjecteurs de fluide agencés de manière périphérique autour de la zone d'appauvrissement de mousse.
